**Europäisches Patentamt**

**European Patent Office**

**Office européen des brevets**

(19)

(11) Veröffentlichungsnummer: **0 030 288**
A1

## (12) EUROPÄISCHE PATENTANMELDUNG

(21) Anmeldenummer: 80107102.8

(22) Anmeldetag: 15.11.80

(51) Int. Cl.³: **C 08 J 5/18**, A 01 G 13/02, C 08 L 23/02

(30) Priorität: 05.12.79 DE 2948911

(43) Veröffentlichungstag der Anmeldung: 17.06.81 Patentblatt 81/24

(84) Benannte Vertragsstaaten: BE CH DE FR IT LI NL

(71) Anmelder: EC ERDÖLCHEMIE GMBH, Postfach 75 2002, D-5000 Köln 71 (DE)

(72) Erfinder: Stahlke, Kurt-Rainer, Dr., Amselweg 7, D-5067 Kürten (DE)
Erfinder: Becker, Wolfgang, Bruchhauser Weg 36, D-4010 Hilden (DE)
Erfinder: Streib, Hugo, Dr., Am Heckerhof 56, D-4150 Krefeld 1 (DE)

(74) Vertreter: Dill, Erwin, Dr. et al, c/o BAYER AG Zentralbereich Patente Marken und Lizenzen Bayerwerk, D-5090 Leverkusen 1 (DE)

(54) Folie, Verfahren zu ihrer Herstellung und ihre Verwendung.

(57) Die Erfindung betrifft Folien aus Polyethylen-Homopolymerisat oder Polyethylen-Copolymerisat, die 1–20 Gew.% des Gesamtgewichts anorganische Füllstoffe enthalten. Die Füllstoffe haben eine Korngrößenverteilung mit mehr als 50 Gew.% im Bereich von 2 bis 6 Mikrometer. Die Folien können infolge speziellen Absorptionsvermögens im Infrarot-Bereich zur Verbesserung des Kleinklimas für landwirtschaftliche Kulturen verwendet werden. Zur Herstellung der erfindungsgemäßen Folien werden 1–20 Gew.% des Gesamtgewichts der Folien anorganische Füllstoffe sowie gegebenenfalls Farbstoffe, Pigmente, Antioxidantien, Antistatika, Antifogmittel, UV-Stabilisatoren und Gleitmittel unter Extrusionsbedingungen mit einem Polyethylen-Homopolymerisat oder -Copolymerisat gemischt.

ACTORUM AG

0030288

EC-Erdölchemie GmbH.,          Köln-Worringen
                              Ha/kl-c
                              4. 12. 78

Folie, Verfahren zu ihrer Herstellung und ihre Verwendung

Die Erfindung betrifft eine Folie, ein Verfahren zu ihrer Herstellung und ihre Verwendung als Gewächshaus- oder Tunnelfolie für landwirtschaftliche Kulturen.

Es ist bekannt, daß für das Pflanzenwachstum sichtbares Licht im Bereich von 380 bis 740 Nanometer (nm) Wellenlänge wichtig ist. Während der Bereich von 740 bis 1050 nm für die Pflanze keine Bedeutung haben soll, da diese Strahlung stark vom Blatt reflektiert wird, führt die weitere langwellige Infrarotstrahlung ab 1050 nm zur Erwärmung der Pflanzen und damit zu einer positiven Wachstumsbeeinflussung (Rheinische Monatsschrift für Gemüse, Obst, Schnittblumen, 12, 399, Bonn 1974). Die in das Gebiet des längerwelligen Infrarot verschobene Rückstrahlung von Wärme vom Erdboden in die Atmosphäre wird im Bereich von etwa 2,5 bis etwa 7,5 Mikrometer von der Luftfeuchtigkeit und im Bereich

EC 101-Ausland

ab etwa 12,5 Mikrometer vom $CO_2$-Gehalt der Luft verhindert oder wenigstens vermindert. Zwischen etwa 7,5 und 12,5 Mikrometer wird eine Abstrahlung von Wärmeenergie von der Erdoberfläche durch keine natürlichen Mittel verhindert. Der Verlust von Wärmeenergie durch diese als "atmosphärisches Fenster" bezeichnete Lücke im Spektralbereich von etwa 7,5 bis 12,5 Mikrometer ist beispielsweise für den intensiven Anbau von Gemüse, Obst und Blumen bedeutsam. So kann eine Schließung des "atmosphärischen Fensters" einen Wärmegewinn und damit eine frühere Reifung und die Erzielung höherer Erträge ermöglichen.

Zur Schließung des "atmosphärischen Fensters" und zur Verbesserung des Kleinklimas bei intensiven Gemüsekulturen werden beispielsweise Abdeckfolien verwendet, die im Bereich des "atmosphärischen Fensters" ausreichend hohe Absorptionswerte aufweisen (Rheinische Monatsschrift, loc. cit.). So zeigt PVC-Folie im gesamten Bereich des Infrarot hervorragende Absorptionswerte, hat jedoch die folgenden Nachteile: Aufgrund der Herstellungsbedingungen geringere Bahnbreite gegenüber etwa Polyethylen-Folien und damit erhöhten Aufwand für das Zusammenschweißen oder -kleben größerer Einheiten, sowie problematische Beseitigung gebrauchter PVC-Folie, weil beispielsweise beim Verbrennen der als Einwegfolie eingesetzten PVC-Folie Chlorwasserstoff entsteht.

Hochdruck- und Niederdruck-Polyethylen sind im Bereich des "atmosphärischen Fensters" weitgehend trans-

EC 101

parent. Von den Ethylen-Copolymeren zeigen beispielsweise Polyethylen-Vinylacetat-Copolymere eine Filterwirkung in diesem Bereich. Weitgehende Filterwirkungen werden jedoch erst bei Vinylacetat-Gehalten von 16 bis 18 Gew.-% oder höher in der Folie erzielt. Solche Folien sind jedoch sehr weich, so daß sie schlecht zu handhaben sind und leicht reißen.

Es ist weiterhin bekannt, Folien mit einem Gehalt von 0,1-0,2 Gew.-% Siliciumdioxid auszurüsten. Hierdurch wird verhindert, daß bei der für Versand und Lagerung üblichen Aufwicklung die einzelnen Wickellagen der Folie zu sehr aneinander haften und beim Abwickeln einreißen.

Es wurde nun eine Folie aus Polyethylen-Homopolymerisat oder Polyethylen-Copolymerisat gefunden, die 1 bis 20 Gew.-%, bezogen auf das Gesamtfoliengewicht, anorganische Füllstoffe enthält.

Das Polyethylen kann ein Hochdruck-Polyethylen mit niedriger Dichte (LDPE) oder ein Niederdruck-Polyethylen mit hoher Dichte (HDPE), bevorzugt LDPE, sein. Der Schmelzindex des verwendeten LDPE beträgt beispielsweise 0,2-4,0 g/10 min (190°C), bevorzugt 0,3-1,5 g/10 min (190°C), die Dichte beträgt beispielsweise 0,915-0,940 g/cm$^3$, bevorzugt 0,919-0,922 g/cm$^3$.

Als gegebenenfalls einsetzbares Copolymeres sei beispielsweise Propen, Buten und Vinylacetat, bevorzugt Vinylacetat, in einer Menge von 1 bis 10 Gew.-%, bevorzugt 2 bis 5 Gew.-%, bezogen auf das Gesamtgewicht des Polymeren, genannt. Der Schmelzindex der zuletzt genannten Produkte beträgt beispielsweise 0,2-8,0 g/10 min (190°C), bevorzugt 0,3-1,5 g/10 min (190°C), die äquivalente Dichte beträgt beispielsweise 0,905-0,930 g/cm$^3$, bevorzugt 0,910-0,922 g/cm$^3$. Die äquivalente Dichte besagt, daß eine Folie beispielsweise aus einem Ethylen/Vinylacetat-Copolymeren in der Stei-

EC 101

figkeit etwa einer Folie gleicher Wanddicke aus einem Ethylen-Homopolymerisat der genannten Dichte entspricht.

Beispiele für das Polymermaterial der erfindungsgemäßen Folie sind: Hochdruck-Polyethylen, Niederdruck-Polyethylen, Hochdruck-Ethylen/Propylen-Copolymer, Niederdruck-Ethylen/Propylen-Copolymer, Hochdruck-Ethylen/Buten-Copolymer, Niederdruck-Ethylen/Buten-Copolymer, Hochdruck-Ethylen/Vinylacetat-Copolymer, Niederdruck-Ethylen/Vinylacetat-Copolymer, bevorzugt Hochdruck-Polyethylen und Hochdruck-Polyethylen-Copolymere, besonders bevorzugt Hochdruck-Ethylen/Vinylacetat-Copolymer.

Als anorganische Füllstoffe seien beispielsweise anorganische Mineralien und anorganische Industrieerzeugnisse, wie $SiO_2$ enthaltende Stoffe, Salze starker anorganischer Säuren oder Metalloxide genannt. Als $SiO_2$ enthaltende Stoffe seien beispielsweise genannt: Natürliches oder synthetisches Siliciumdioxid, Silikatglas, Glas in Form von Glasfaser, Kurzglas, Glaspulver oder Glaskugeln, Kieselerde, Schiefermehl, Glimmer oder Asbest. Als Salze starker anorganischer Säuren seien beispielsweise Pyrophosphate, Sulfate oder Pyrosulfate genannt. Als Metalloxid sei beispielsweise Titandioxid genannt. Als Füllstoffe werden bevorzugt $SiO_2$ enthaltende Stoffe, bevorzugt natürliches oder synthetisches $SiO_2$, eingesetzt. Die genannten Füllstoffe können einzeln oder als Gemisch eingesetzt werden.

Als Menge der Füllstoffe sei beispielsweise eine Menge von 1 bis 20, bevorzugt 2 bis 10, besonders bevorzugt 4 bis 6 Gew.-%, bezogen auf das Gesamtgewicht der Folie, genannt.

Während Füllstoffe in höheren Konzentrationen, beispielsweise ab etwa 3 Gew.-%, bezogen auf das Gesamtgewicht der Folie, die Transparenz, das äußere Erschei-

EC 101

nungsbild, die Folienoptik (beispielsweise Folienfehler) und die mechanischen Eigenschaften stark beeinträchtigen können, wurde überraschenderweise gefunden, daß sich Füllstoffe ohne Beeinträchtigung der Folieneigenschaften auch im Bereich der genannten höheren Konzentrationen einarbeiten lassen, wenn sie zu mehr als 50 Gew.-% der gesamten Füllstoffmenge eine Korngrößenverteilung im Bereich von etwa 2 bis 6 Mikrometer aufweisen und nur etwa 5 % oder auch weniger des gesamten Gewichts des Füllstoffes eine Korngrößenverteilung über 20 Mikrometer aufweisen.

Die erfindungsgemäßen Folien können weiterhin übliche Mengen an Farbstoffen, Pigmenten, Antioxidantien, Antistatika, Antifogmittel, UV-Stabilisatoren und Gleitmittel enthalten.

Die erfindungsgemäßen Folien zeigen eine starke Absorption im Bereich von etwa 7,5 bis etwa 12,5 Mikrometer, sind jedoch in den übrigen Wellenbereichen weitgehend transparent. Die Lichttransmission der erfindungsgemäßen Folie liegt bei einer Folienstärke von 60-400µm, bevorzugt 80-200µm, und üblichen Mengen von an sich bekannten Zusatzstoffen über 80%, bevorzugt bei etwa 84 bis 89 % (ASTM-Norm D 1003/61). Im Vergleich zur Lichttransmission einer Folie gleicher Stärke aus dem gleichen Polymermaterial, jedoch ohne die obengenannten Füllstoffe, hat die erfindungsgemäße Folie eine um weniger als 3 % niedrigere Lichttransmission. Die erfindungsgemäße Folie hat einen Biege-E-Modul von

mindestens 170 N/mm² (gemessen nach der 3-Punkte-Biegemethode entsprechend FNK 403.3 an 20 x 200 mm-Probekörpern und einem Auflageabstand von 100 mm).

Es wurde weiterhin ein Verfahren zur Herstellung einer Folie durch Extrusion gefunden, das dadurch gekennzeichnet ist, daß man in ein Polyethylen-Homopolymerisat oder Polyethylen-Copolymerisat unter an sich bekannten Extrusionsbedingungen 1 bis 20 Gew.-%, bezogen auf das Gesamtfoliengewicht, anorganische Füllstoffe homogen einmischt und gegebenenfalls an sich bekannte Farbstoffe, Pigmente, Antioxidantien, Antistatika, Antifoggingmittel, UV-Stabilisatoren und Gleitmittel zusetzt.

Die einzelnen Füllstoffe oder das Gemisch solcher Füllstoffe können sowohl als solche als auch in Form eines separat hergestellten Konzentrats aus einem für das erfindungsgemäße Verfahren einsetzbaren Polymermaterial und den Füllstoffen eingesetzt werden. Solche Konzentrate sind dem Fachmann als Masterbatch bekannt. Als erfindungsgemäß einsetzbares Polymermaterial für solche Masterbatches sei beispielsweise das gleiche Polymermaterial genannt, in das das Masterbatch eingemischt wird. Falls dieses Polymermaterial ein Copolymeres aus Ethylen und einem weiteren Vinylpolymeren ist, kann jedoch zur Herstellung des Masterbatches auch ein Ethylen-Homopolymerisat verwendet werden. Die Konzentration der Füllstoffe im Masterbatch kann bei-spielsweise 25 - 60 Gew.-%, bevorzugt 40 - 55 Gew.-%, bezogen auf das Gesamtgewicht des Masterbatch, betragen. Beim Einsatz mehrerer Füllstoffe können diese einzeln oder als Gemisch in das Folien-Polymermaterial homogen

EC 101

eingemischt werden. Falls mehrere Füllstoffe in Form eines Masterbatch eingesetzt werden, kann sowohl ein Masterbatch mit allen einzusetzenden Füllstoffen, als auch mehrere Masterbatches mit je einem oder mehreren Füllstoffen verwendet werden. Die gegebenenfalls einzusetzenden Farbstoffe, Pigmente, Antioxidantien, Antistatika, Antifoggingmittel, UV-Stabilisatoren und Gleitmittel können in dem Masterbatch oder den Masterbatches des Füllstoffes oder der Füllstoffe gleichzeitig enthalten sein aber auch als solche eingesetzt werden oder enthalten in einem eigenen Masterbatch im erindungsgemäßen Verfahren verwendet werden. Bevorzugt werden die erfindungsgemäßen Füllstoffe, sowie die Farbstoffe, Pigmente, Antioxidantien, Antistatika, Antifoggingmittel, UV-Stabilisatoren und Gleitmittel in Form von Masterbatches eingesetzt, wobei besonders bevorzugt separate Masterbatches für den Füllstoff oder die Füllstoffe und die übrigen genannten Zusatzstoffe verwendung finden.

Die homogene Einmischung der Füllstoffe, sowie der übrigen genannten Zusatzstoffe erfolgt in einer dem Fachmann bekannten Weise, beispielsweise in Extrudern mit Scher- und Mischteilschnecken. Die Herstellung der Folie kann beispielsweise auf praxisüblichen Blasfolienextrudern vorgenommen werden.

Die erfindungsgemäße Folie kann beispielsweise infolge ihrer speziellen Absorptionseigenschaften bei weitgehender Erhaltung der Transmission für sichtbares Licht und kurzwellige IR-Strahlung zur Verhinderung der Wärmeabstrahlung von Pflanzen, vom Erdboden oder von anderen Gegenständen und Körpern dienen. Dies ist besonders in der Landwirtschaft zur früheren und/oder schnelleren Reifung bei verschiedenen Gemüse-, Obst- oder Blumenkulturen

EC 101

oder zur Abhaltung von Nachtfrösten bei empfindlichen Kulturen wichtig. Die Erfindung betrifft daher weiter die Verwendung der oben beschriebenen neuen Folien zur Verbesserung des Kleinklimas für landwirtschaftliche Kulturen.

Für diese erfindungsgemäße Verwendung werden beispielsweise Folien mit einer Schichtdicke von 60 - 400 µm, bevorzugt 80 - 200 µm eingesetzt.

Während der Transmissionsgrad der erfindungsgemäßen Folie durch die eingearbeiteten Füllstoffe nur wenig beeinflußt wird, kann der Trübungsgrad ansteigen. Dies ist jedoch für die erfindungsgemäße Verwendung vorteilhaft, weil eine große Streuung des einfallenden Sonnenlichtes eine eventuelle Überhitzung oder Verbrennung einzelner Pflanzen oder Pflanzenteile verhindert oder wenigstens vermindert.

EC 101

## Beispiele

Der in den Beispielen enthaltene Begriff der äquivalenten Dichte besagt, daß eine Folie beispielsweise aus einem Ethylen/Vinylacetat-Copolymeren in der Steifigkeit etwa einer Folie gleicher Wanddicke aus einem Ethylen-Homopolymerisat der genannten Dichte entspricht.

## Beispiel 1

Ein Ethylenvinylacet(EVA)-Copolymeres mit einer äquivalenten Dichte = 0,910 g/cm³, einem Schmelzindex von 1,5 g/10 Minuten bei 190°C und einem Vinylacetat-(VA)-Gehalt von 8,5 Gew.-%, bezogen auf das Gesamtgewicht des Copolymeren, wurden mit 12 Gew.-%, bezogen auf das EVA-Copolymere, eines Masterbatches, bestehend aus 50 Gew.-% $SiO_2$ und 50 Gew.-% eines Polyethylen-Homopolymeren (Dichte = 0,919 g/cm³, Schmelzindex = 7 g/10 Minuten bei 190°C) gemischt und auf einer Blasfolienanlage (Typ Kiefel R 021) mit einem Ausstoß von 15 kg/Stunde, einem Extruderkopf von 200 mm Durchmesser, einem Spalt von 0,8 mm Stärke, einem Aufblasverhältnis von 1:2,5, einer Massetemperatur von 200°C, einer Abzugsgeschwindigkeit von 15 m/Minute und einem Druck von etwa 180 bis 220 bar verarbeitet. Die Folie enthielt zusätzlich 0,8 % eines handelsüblichen UV-Absorbers auf Basis Hydroxy-benzophenon/Nickel-Quencher. Das eingemischte $SiO_2$ besaß folgende Korngrößenverteilung: 0,2 bis 2 Mikrometer = 6 % des Gesamt-$SiO_2$-Gewichts, 2 bis 6 Mikrometer = 51 %, 6 bis 20 Mikrometer = 40 % und 20 bis 60 Mikrometer = 3 %.

EC 101

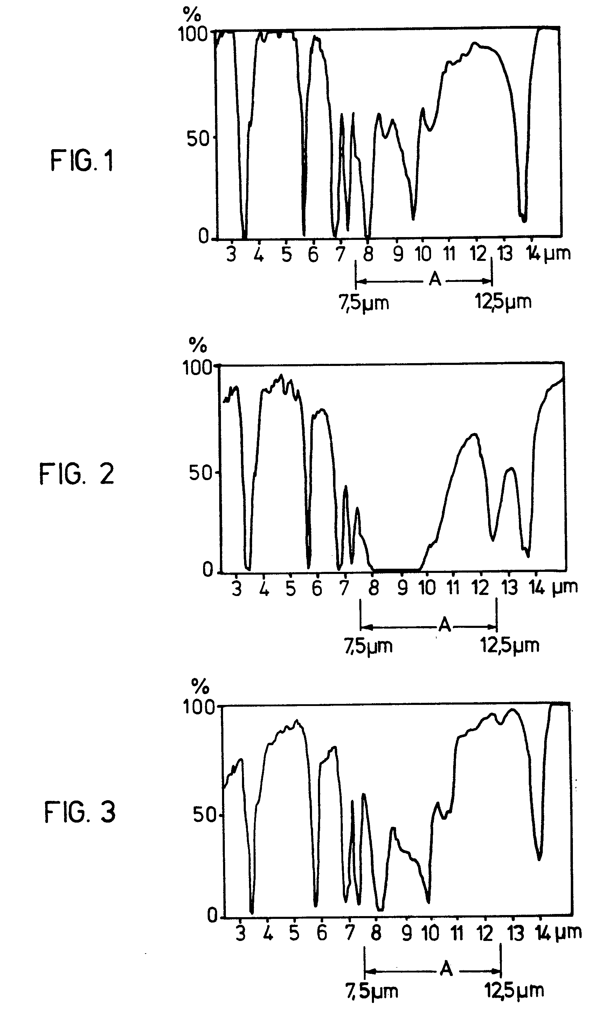

Im Infrarot-Spektrum war im Bereich von 7,5 bis 12,5 Mikrometer bei einer Schichtdicke von 100 Mikrometer sehr starke Absorption, im Bereich von 8 bis etwa 10 Mikrometer sogar Toalabsorption, zu erkennen (Fig. 2). Im Vergleich hierzu zeigt das Grundharz eine deutlich schwächere Absorption (Fig. 1).

Beispiel 2

Es wurde ein in Beispiel 1 beschriebenes Copolymeres mit 7,5 Gew.-%, bezogen auf das Copolymere, eines in Beispiel 1 beschriebenen Masterbatches gemischt und, wie in Beispiel 1 beschrieben, zu Blasfolien verarbeitet. Die Folie enthielt zusätzlich 0,8 Gew.-% eines UV-Absorbers wie im Beispiel 1. Im Infrarot-Spektrum war im Bereich von 7,5 bis 12,5 Mikrometer bei einer Schichtdicke von 100 Mikrometer weitgehend Totalabsorption zu erkennen.

Beispiel 3

Ein EVA-Copolymeres (äquivalente Dichte = 0,922 g/cm³, Schmelzindex = 0,2 g/10 Minuten bei 190 °C, VA-Gehalt = 2 Gew.-%) wurde mit 10 Gew.-% eines in Beispiel 1 beschriebenen Masterbatches versetzt und, wie in Beispiel 1 beschrieben, zu Blasfolien verarbeitet. Die Folie enthielt zusätzlich 0,8 Gew.-% eines UV-Absorbers wie im Beispiel 1, der gleichzeitig mit dem Füllstoff im Masterbatch enthalten war. Im Infrarot-Spektrum war im Bereich von 7,5 bis 12,5 Mikrometer bei einer Schichtdicke von 100 Mikrometer weitgehend Totalabsorption zu erkennen.

EC 101

Beispiel 4

Es wurde ein EVA-Copolymeres (äquivalente Dichte = 0,918 g/cm$^3$, Schmelzindex = 0,5 g/10 Minuten bei 190°C, VA-Gehalt = 3,5 Gew.-%) mit 10 Gew.-% eines in Beispiel 1 beschriebenen Masterbatches gemischt und, wie in Beispiel 1 beschrieben, verarbeitet. Die Folie enthielt zusätzlich 0,8 Gew.-% eines UV-Absorbers wie im Beispiel 1, der ebenfalls im Füllstoff-Masterbatch enthalten war. Im Infrarot-Spektrum war im Bereich von 7,5 bis 12,5 Mikrometer bei einer Schichtdicke von 100 Mikrometer weitgehend Totalabsorption zu erkennen.

Beispiel 5

Es wurde ein in Beispiel 4 beschriebenes Copolymeres mit 10 Gew.-% eines in Beispiel 1 beschriebenen Masterbatches versetzt und, wie in Beispiel 1 beschrieben, verarbeitet. Die Folie enthielt zusätzlich 0,5 Gew.-% eines UV-Absorbers wie im Beispiel 1. Im Infrarot-Spektrum war im Bereich von 7,5 bis 12,5 Mikrometer bei einer Schichtdicke von 100 Mikrometer weitgehend Totalabsorption zu erkennen.

Beispiel 6

Die in den Beispielen 1 bis 4 erhaltenen Folien werden einer Messung des Lichttransmissionsgrades und der Trübung nach ASTM-Norm 1003-52 in einem Gardner-Photometer unterzogen. Zum Vergleich werden Folien herangezo-

EC 101

gen, die analog den Beispielen 1 bis 4, jedoch ohne Zusatz des Füllstoff-Masterbatches, bzw. mit einem veränderten Gehalt an UV-Absorber hergestellt worden sind.

Hierbei wurden die Folien aus den Beispielen 1 bis 4 mit dem Kennbuchstaben a) versehen, während die analog hergestellten Folien mit b) bzw. c) bezeichnet werden.

Weiterhin wurde in diesem Vergleich eine Folie aus einem Ethylen/Vinylacetat-Copolymeren mit einem Gehalt von 18 Gew.-% Vinylacetat, bezogen auf das Gesamtpolymermaterial, und einem Schmelzindex von 1,57/10 Minuten (190 °C) und einem Gehalt von 0,8 Gew.-% UV-Absorber in die photometrischen Messungen einbezogen. Die folgende Tabelle zeigt die Ergebnisse.

EC 101

| Folie (mit Gew.-% Master-batch und Gew.-% UV-Absorber) | Lichttrans-mission (%) | Trübung (%) |
|---|---|---|
| 1a) (12 % MB + 0,8 % UV-Abs.) | 88,0 | 35,0 |
| 1b) (12 % MB + 0,5 % UV-Abs.) | 88,5 | 31,5 |
| 1c) (kein MB, kein UV-Abs.) | 90,2 | 4,0 |
| 2a) (7,5 % MB + 0,8 % UV-Abs.) | 88,6 | 26,2 |
| 2b) (kein MB, kein UV-Abs.) | 90,2 | 4,0 |
| 3a) (10 % MB + 0,8 % UV-Abs.) | 84,4 | 44,4 |
| 3b) (kein MB, kein UV-Abs.) | 87,2 | 20,5 |
| 4a) (10 % MB + 0,8 % UV-Abs.) | 87,7 | 44,5 |
| 4b) (kein MB, kein UV-Abs.) | 90,1 | 9,1 |
| Vergleichsfolie (+ 0,8 % UV-Abs.) | 86,8 | 32,9 |

Die Vergleichsfolie zeigt eine wesentlich geringere Absorption im Bereich des "atmosphärischen Fensters" (Fig. 3), die der Absorption der Folie 1c) ähnelt (Fig. 1), während die Folie 1a) starke Absorption zeigt (Fig. 2).

Beispiel 7

In der folgenden Tabelle sind Vergleichswerte für die
Biegesteifigkeit entsprechend dem 3-Punkt-Biegeversuch
FNK 403.31 verschiedener Folien bei 20°C aufgeführt.

| Folie | E-Modul (N/mm²) | |
|---|---|---|
| | längs | quer |
| 4a) | 183 | 174 |
| 4b) | 238 | 204 |
| 4b) + 0,8 % UV-Absorber | 229 | 199 |
| Vergleichsfolie (18 % Vinylacetat + 0,8 % UV-Abs. aus Beispiel 6) | 37 | 34 |

Beispiel 8

Beim Einsatz als Gewächshausfolie (Kastenabmessungen
200 x 300 x 60 cm, Folienabdeckung 200 x 300 cm Fläche,
Lüftungsmöglichkeit) wurde als absorbierendes Medium
Torfmull in einer Höhe von ca. 3 cm ausgelegt. Einer
der Kästen wurde mit Folie nach Beispiel 4a) (Masterbatch-Zusatz von 10 Gew.-% und UV-Absorbergehalt von
0,8 Gew.-%) abgedeckt. Ein zweiter Kasten wurde mit
einer analog Beispiel 4 hergestellten Vergleichsfolie
ohne Füllstoff, jedoch mit 0,8 Gew.-% UV-Absorber abgedeckt. Über einen Zeitraum von 4 Wochen wurde die

EC 101

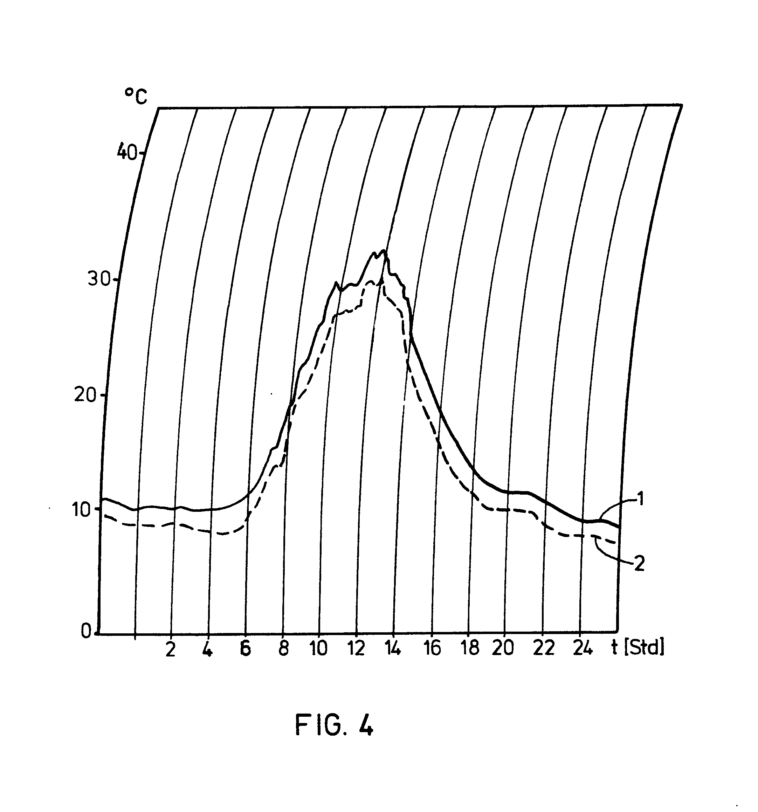

Temperatur, sowie die Luftfeuchtigkeit in den Kästen
gemessen, wobei nachts abgedeckt, tagsüber gelüftet
wurde. Unter der füllstoffhaltigen Folie nach Beispiel
4 (durchgezogene Linie "1" in der Graphik in Fig. 4)
wurden um 0,2 bis 2,0°C höhere Temperaturen als unter
der füllstofffreien Vergleichsfolie (gestrichelte Linie "2"
in der Graphik in Fig. 4) gemessen. Je nach Art
der landwirtschaftlichen Kultur und Anpflanzung führt
dies zu einer Ernteverfrühung von einigen Tagen bis zu
3 Wochen.

EC 101

Patentansprüche

1.  Folie aus Polyethylen-Homopolymerisat oder Polyethylen-Copolymerisat, die 1 bis 20 Gew.-%, bezogen auf das Gesamtfoliengewicht, anorganische Füllstoffe enthält.

2.  Folie nach Anspruch 1 aus Hochdruck-Polyethylen-Homopolymerisat oder Hochdruck-Polyethylen-Copolymerisat als dem Polymermeraterial.

3.  Folie nach Anspruch 1 und 2 aus Hochdruck-Ethylen/Vinylacetat-Copolymerisat mit einem Vinylacetat-Gehalt von 1 bis 10 Gew.-%, bezogen auf das Gesamtgewicht des Polymeren, als Polymermaterial.

4.  Folie nach Ansprüchen 1 bis 3, die silikatische Füllstoffe enthält.

5.  Folie nach Ansprüchen 1 bis 4, die $SiO_2$ als Füllstoff enthält.

6.  Folie nach Ansprüchen 1 bis 5, die anorganische Füllstoffe mit einer Korngrößenverteilung von mehr als 50 Gew.-% der Füllstoffe im Bereich von 2 bis 6 Mikrometer und nur etwa 5 Gew.-% oder weniger des Füllstoffes im Bereich von über 20 Mikrometer enthält.

7.  Folie nach Ansprüchen 1 bis 6 mit speziellem Absorptionsvermögen im Infrarot-Bereich.

EC 101

8. Verfahren zur Herstellung einer Folie nach Anspruch 1 durch Extrusion, dadurch gekennzeichnet, daß man in ein Polyethylen-Homopolymerisat oder -Copolymerisat unter an sich bekannten Extrusionsbedingungen 1 bis 20 Gew.-%, bezogen auf das Gesamtfoliengewicht, anorganische Füllstoffe homogen einmischt und gegebenenfalls an sich bekannte Farbstoffe, Pigmente, Antioxidantien, Antistatika, Antifogmittel, UV-Stabilisatoren und Gleitmittel zusetzt.

9. Verwendung von Folien aus Polyethylen-Homopolymerisat oder -Copolymerisat mit 1 bis 20 Gew.-%, bezogen auf das Gesamtfoliengewicht, anorganischen Füllstoffen zur Verbesserung des Kleinklimas für landwirtschaftliche Kulturen.

10. Verwendung von Folien nach Anspruch 9 in einer Schichtdicke von 60 bis 400 Mikrometern.

EC 101

FIG. 1

FIG. 2

FIG. 3

0030288

1/2

FIG. 4

**Europäisches Patentamt**

**EUROPÄISCHER RECHERCHENBERICHT**

0030288

Nummer der Anmeldung

EP 80 10 7102

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 638 273 (LES PLASTIQUES DE CARMAUX) <br> * Patentansprüche; Seite 6, Zeilen 10-11, 14-19 * | 1-10 |
| X | FR - A - 1 574 088 (ETHYLENE PLASTIQUE) <br> * Patentansprüche * | 1-10 |
| | FR - A - 2 347 405 (LES PLASTIQUES DE CARMAUX SCASAR) <br> * Patentansprüche * | 1 |

**KLASSIFIKATION DER ANMELDUNG (Int. Cl.³)**

C 08 J 5/18
A 01 G 13/02
C 08 L 23/02

**RECHERCHIERTE SACHGEBIETE (Int. Cl.³)**

C 08 J 5/18
A 01 G 13/02
C 08 L 23/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 13-03-1981 | VAN GOETHEM |

EPA form 1503.1  06.78